# EUROPEAN PATENT APPLICATION

(11) **EP 2 326 145 A1**
(43) Date of publication of application: **25.05.2011**
(21) Application number: 10188063.1
(22) Date of filing: 19.10.2010
(51) Int. Cl.: H05B 33/08, H05B 39/04

(54) **LED lamp and LED lamp module**

(30) Priority: 13.11.2009 TW 98138597
(71) Applicant: Delta Electronics, Inc., Taoyuan Hsien 333 (TW)
(72) Inventor: Chao, Yung-Hsiang, 333, Kuei San, Taoyuan Hsien (TW); Fang, Jia-Long, 333, Kuei San, Taoyuan Hsien (TW); Liu, Kuo-Jui, 333, Kuei San, Taoyuan Hsien (TW)
(74) Representative: 2K Patentanwälte Blasberg Kewitz & Reichel

(57) **Abstract**

A light emitting diode (LED) lamp. Brightness of the LED lamp is controlled by a dimmer and an external alternating current (AC) source is received via the dimmer. The LED lamp includes at least one LED, a rectifying-modulating-driving apparatus and a current holding compensator. The rectifying-modulating-driving apparatus is coupled between the LED and the dimmer for bridge-rectifying and modulating an AC source with a conducting angle from the dimmer to drive the LED. The current holding compensator is coupled to the rectifying-modulating-driving apparatus to provide a compensation current when the AC source with the conducting angle is lower than a voltage after being bridge-rectified.

## Description

### CROSS REFERENCE TO RELATED APPILCATIONS

This Application claims priority of Taiwan Patent Application No. 098138597, filed on November 13, 2009, the entirety of which is incorporated by reference herein.

### BACKGROUND OF THE INVENTION

### Field of the Invention

The invention relates to a Light Emitting Diode (LED), and more particularly to an LED dimming technique.

### Description of the Related Art

Light Emitting Diode (LED) lamps have the advantages of long lifespan, low power consumption, short response time, low operating temperature...etc. Therefore, LED lamps have gradually replaced tungsten lamps in everyday life. However, since LED lamps can only be driven by a direct current (DC) source, it is difficult for designers of LED lamps to directly match the direct current (DC) of LEDs with the alternating current (AC) provided in most homes; whereas traditional tungsten lamps do not have this problem. Also, while brightness of traditional tungsten lamps can be controlled by standard dimmers, brightness of LEDs can not.

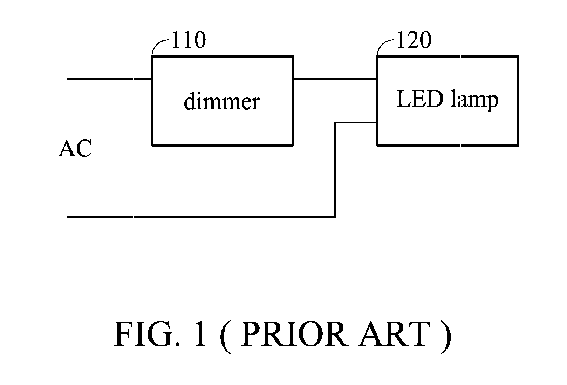

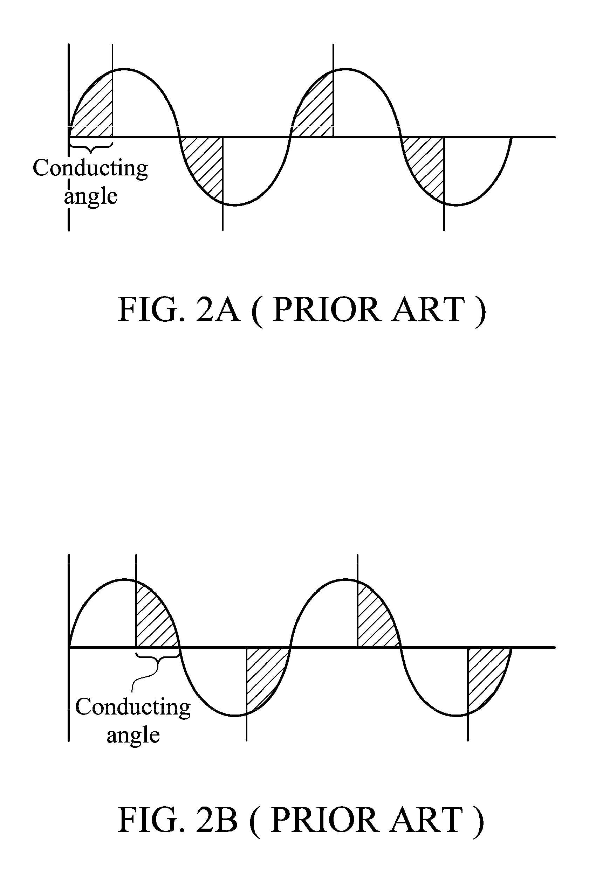

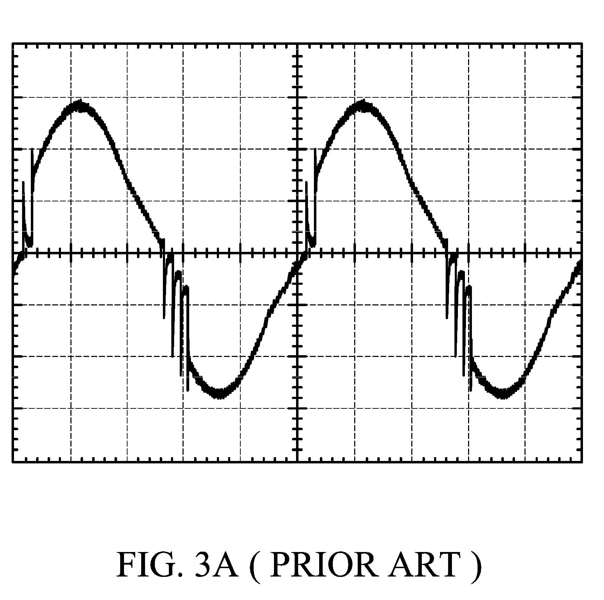

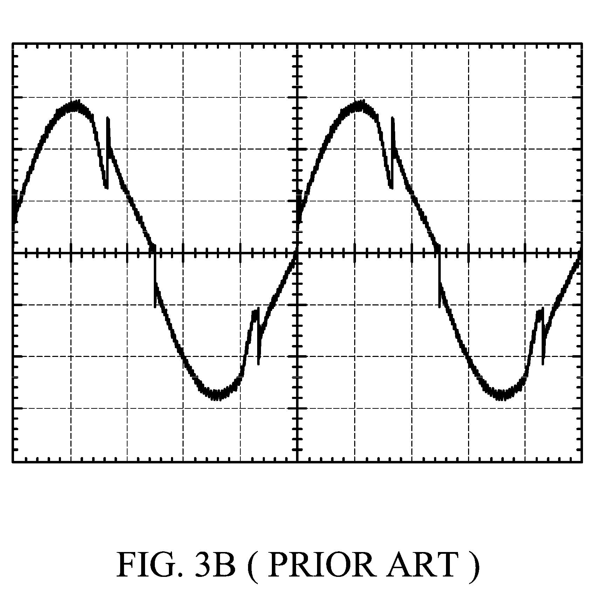

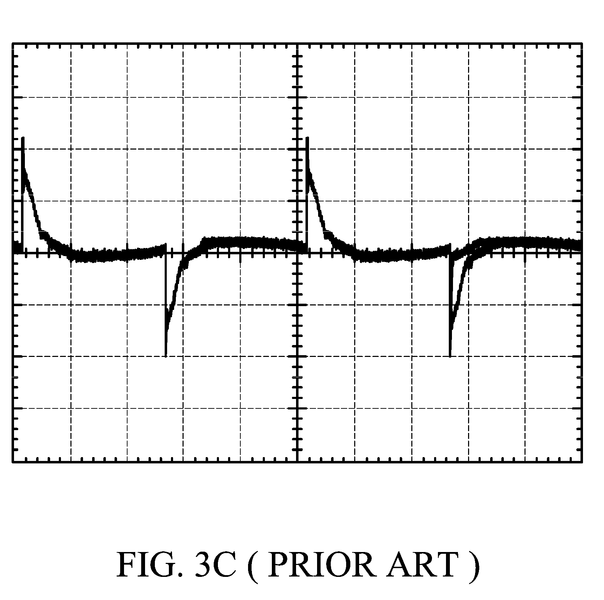

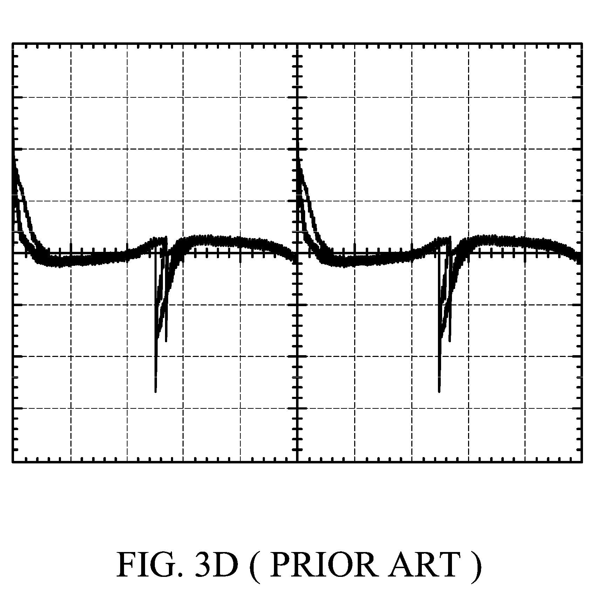

FIG. 1 is a schematic diagram showing a combination of a dimmer and an LED. The dimmer 110 uses a common Triode for Alternating Current (Triac) or Silicon Controlled Rectifier (SCR) to change an input conducting angle of an AC source, thereby changing the brightness generated by a light emitting load. The conducting angle controlled by the dimmer 110 is shown in FIG. 2A and FIG. 2B. As shown in FIG. 2A, the conducting angle is defined along rising edge(s) as shown at the left side of the AC source. As shown in FIG. 2B, the conducting angle is defined along rising edge(s) as shown at the right side of the AC source. Tungsten lamps are usually adopted as the above-mentioned light emitting load. However, when an LED lamp 120 is utilized as the light emitting load, operation of the circuit connected between the dimmer 110 and the AC source is not stabilize due to the lack of a steady current, thereby causing the LED lamp 120 to flicker. FIG. 3A, FIG. 3B, FIG. 3C and FIG. 3D respectively show a waveform of the voltage measured at the input terminal of the LED lamp 120, where the waveforms shown in FIG. 3A and FIG. 3B are obtained when the conducting angle is tuned to a maximum value, and the waveforms shown in FIG. 3C and FIG. 3D are obtained when the conducting angle is tuned to a minimum value. As shown in FIGs. 3A-3D, the waveforms of the voltage of the LED lamp 120 are all undesirable. Therefore, the brightness of the LED lamp 120 cannot be successfully controlled by the dimmer 110.

### BRIEF SUMMARY OF THE INVENTION

A light emitting diode (LED) lamp and an LED lamp module are provided. The brightness of the LED lamp is controlled by a dimmer and the LED lamp receives an external alternating current (AC) source via the dimmer. An exemplary embodiment of the LED lamp comprises at least one LED, a rectifying-modulating-driving apparatus and a current holding compensator. The rectifying-modulating-driving apparatus is coupled between the LED and the dimmer for bridge-rectifying and modulating an AC source with a conducting angle from the dimmer to drive the LED. The current holding compensator is coupled to the rectifying-modulating-driving apparatus to provide a compensation current when the AC source with the conducting angle is lower than a voltage after being bridge-rectified.

The conducting angle is defined along rising or falling edge(s) of the AC source.

The current holding compensator comprises: a comparator, comparing a reference voltage and a sample voltage sampled from the rectifying-modulating-driving apparatus to output a control signal; and a control switch, coupled to an output terminal of the comparator and a ground node of the rectifying-modulating-driving apparatus to control the compensation current between the rectifying-modulating-driving apparatus and a ground according to the control signal.

The comparator comprises: a first input terminal, receiving the reference voltage; and a second input terminal, receiving the sample voltage.

The first input terminal is a positive input terminal and the second input terminal is a negative input terminal.

The current holding compensator further comprises a capacitor coupled between the negative input terminal and the output terminal of the comparator to prevent an output of the comparator from oscillating at a threshold point.

The current holding compensator further comprises a first resistor and a power supply, and the output terminal of the comparator is coupled to the power supply via the first resistor.

The current holding compensator further comprises: a reference voltage generator, coupled to power supply to generate the reference voltage; and a voltage sampler, coupled to the rectifying-modulating-driving apparatus to obtain the sample voltage from the rectifying-modulating-driving apparatus.

The rectifying-modulating-driving apparatus comprises a rectifier coupled to the dimmer to bridge-rectify the AC source with the conducting angle so as to generate a rectified source.

The rectifier is a bridge composed of a plurality of diodes.

The sample voltage is obtained by sampling the rectified source.

The rectifying-modulating-driving apparatus further comprises: a first voltage drop circuit, coupled to the rectifier and receiving the rectified source to generate a voltage drop source; an output current controller, coupled between the first voltage drop circuit and the LED; and a pulse width modulation phase controller, coupled to the first voltage drop circuit and the output current controller for modulating the voltage drop source and generating a pulse width modulation (PWM) signal, wherein the output current controller drives the LED according to the PWM signal.

The first voltage drop circuit comprises a first transistor, a Zener diode and a second resistor, one terminal of the second resistor is coupled to an output terminal of the rectifier and a drain of the first transistor, and another terminal of the second resistor is coupled to a gate of the first transistor and a cathode of the Zener diode, and an anode of the Zener diode is coupled to the ground and a source of the first transistor is coupled to the control switch of the current holding compensator.

The control switch comprises a second transistor, the second transistor comprises a gate, a first source/drain and a second source/drain, respectively coupled to an output terminal of the comparator, the first voltage drop circuit and the ground.

The rectifying-modulating-driving apparatus further comprises a power factor correction circuit coupled between the first voltage drop circuit and the output current controller to correct the power factor of the AC source so as to reduce switching power loss.

The power factor correction circuit comprises: a first diode; a second diode; a third diode; a first capacitor; and a second capacitor, wherein the first capacitor is coupled between an input terminal of the power factor correction circuit and an anode of the second diode; the second capacitor is coupled between a cathode of the second diode and the ground; an anode and a cathode of the first diode are respectively coupled to the ground and the anode of the second diode; an anode and a cathode of the third diode are respectively coupled to the cathode of the second diode and an output terminal of the power factor correction circuit; the input terminal of the power factor correction circuit is coupled to an output terminal of the rectifier; and the output terminal of the power factor correction circuit is coupled to an input terminal of the output current controller.

The sample voltage is obtained from a node between the first capacitor and the first diode of the power factor correction circuit.

The sample voltage is obtained from a node between the rectifier and the output current controller.

The LED lamp further comprises a second voltage drop circuit, coupled between an output terminal of the rectifier and the control switch.

Another exemplary embodiment of a light emitting diode (LED) lamp module comprises: at least one LED; a dimmer, an external alternating current (AC) source is received and generating an AC source with a conducting angle; a rectifying-modulating-driving apparatus, coupled between the LED and the dimmer for bridge-rectifying and modulating the AC source with the conducting angle to drive the LED; and a current holding compensator, coupled to the rectifying-modulating-driving apparatus to provide a compensation current when the AC source with the conducting angle is lower than a voltage after being bridge-rectified.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:

FIG. 1 is a schematic diagram showing a combination of a dimmer and an LED;

FIG. 2A and FIG. 2B show the conducting angle of the AC source;

FIG. 3A, FIG. 3B, FIG. 3C and FIG. 3D respectively shows a waveform of the voltage measured at the input terminal of the LED lamp;

FIG. 4A and FIG. 4B respectively shows a desirable waveform of the voltage measured at the input terminal of the LED lamp when the conducting angle is tuned to a maximum and a minimum value;

FIG. 5 shows a schematic diagram of an LED lamp according to an embodiment of the invention;

FIG. 6A shows an exemplary waveform of the voltage after being bridge-rectified;

FIG. 6B shows an exemplary waveform of a PWM signal; and

FIG. 7 shows a schematic diagram of an LED lamp according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

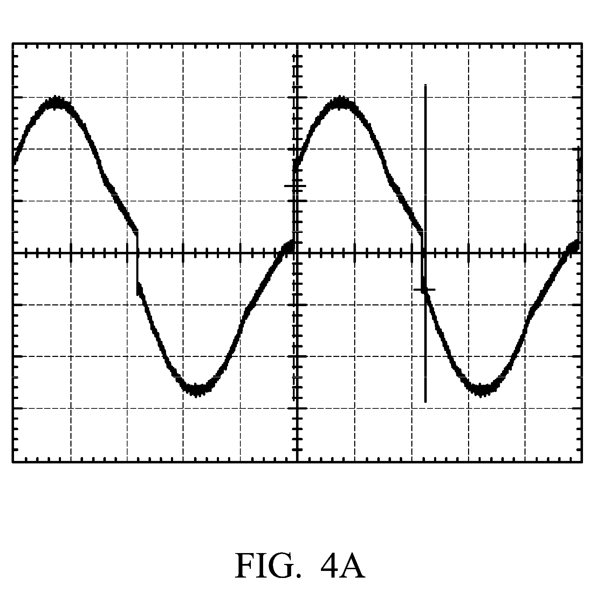

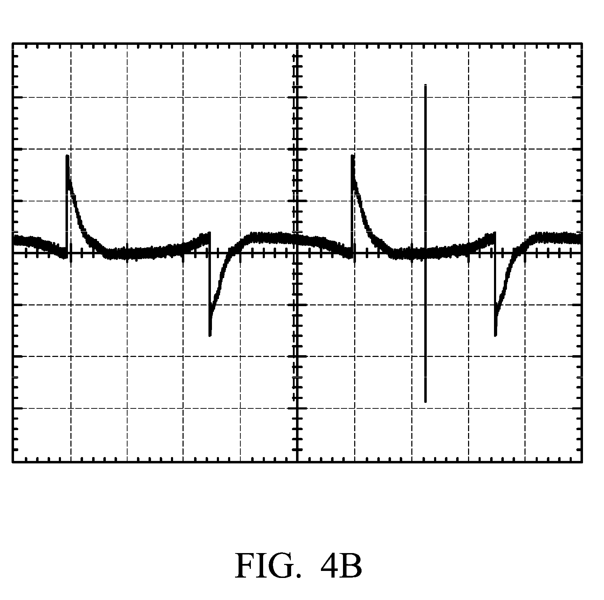

FIG. 4A and FIG. 4B respectively show a desirable waveform of the voltage measured at the input terminal of the LED lamp when the conducting angle is tuned to a maximum value and a minimum value. The purpose of the invention is to adjust the undesirable voltage waveform generated when coupling the LED lamp to the dimmer in the conventional design to desirable waveforms as shown in FIG. 4A and FIG. 4B, thereby controlling and adjusting the brightness of the LED lamp via the dimmer.

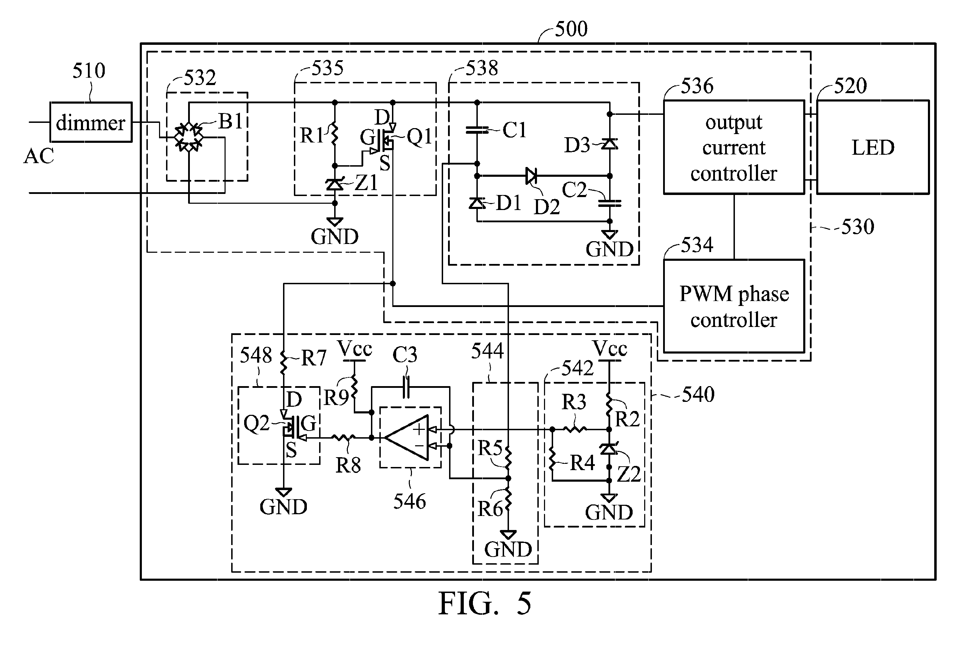

FIG. 5 shows a schematic diagram of an LED lamp according to an embodiment of the invention. The LED lamp 500 is plugged into a lamp holder with a dimmer 510. The brightness of the LED lamp is controlled via the dimmer 510, and the LED lamp receives an external alternating current (AC) source via the dimmer 510. According to an embodiment of the invention, the dimmer 510 may be a Triode for Alternating Current (Triac) or Silicon Controlled Rectifier (SCR), but should not be limited thereto. The external AC source is received by the dimmer 510, and an AC source with a conducting angle is output therefrom. The dimmer 510 controls the conducting angle of the AC source.

The principle of operations of the dimmer 510 has been described previously and is omitted here for brevity. The appearance of the LED lamp 500 may be in any form, such as a tube light or light bulb, and may be assembled with the lamp holder and dimmer in any form and dismantled therefrom.

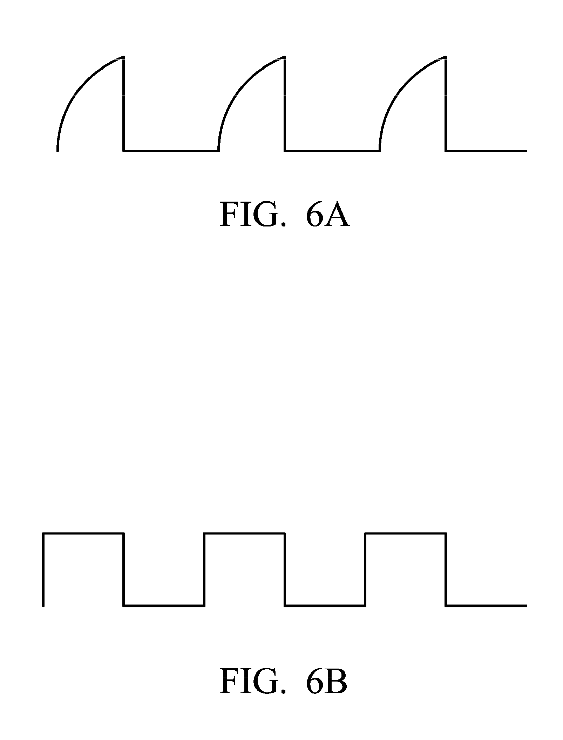

The LED lamp 500 comprises at least one LED 520 and a rectifying-modulating-driving apparatus 530. The rectifying-modulating-driving apparatus 530 bridge-rectifies and modulates the AC source with the conducting angle from the dimmer 510 so as to drive the LED 520. The conducting angle is defined along rising or falling edge(s) of the AC source (as shown in FIG. 2A and FIG. 2B). In the embodiments of the invention, the rectifying-modulating-driving apparatus 530 comprises a rectifier 532, a pulse width modulation (PWM) phase controller 534, an output current controller 536, a Power Factor Correction (PFC) circuit 538 and a voltage drop circuit 535. The rectifier 532 may be a bridge B1 composed of a plurality of diodes to receive the AC source with the conducting angle from the dimmer 510 and bridge-rectify the AC source so as to generate a rectified source. If the conducting angle set by the dimmer 510 is about 90 degrees, the waveform of the voltage after being bridge-rectified may be similar to the one shown in FIG. 6A. The PWM phase controller 534 is coupled to the rectifier 532 and the output current controller 536 and generates the PWM signal having different duty cycles according to the rectified source as shown in FIG. 6B. The output current controller 536 is coupled between the LED 520 and the rectifier 532 and drives the LED 520 according to the PWM signal.

In the embodiments of the invention, the voltage drop circuit 535 as shown in FIG. 5 may be comprised of a transistor Ql, a Zener diode Z1 and a resistor R1. The voltage drop circuit 535 is coupled to the rectifier 532, the PWM phase controller 534 and the output current controller 536 so as to reduce the voltage input to the PWM phase controller 534, receive the rectified source and generate a voltage drop source. According to an embodiment of the invention, the voltage drop circuit 535 may be comprised of a transistor Q1, a Zener diode Z1 and a resistor R1 as shown in FIG. 5, where one terminal of the resistor R1 is coupled to an output terminal of the rectifier 532 and a drain of the transistor Ql, and another terminal of the resistor R1 is coupled to a gate of the transistor Ql and a cathode of the Zener diode Z1, and an anode of the Zener diode Z1 is coupled to the ground and a source of the transistor Ql is coupled to a control switch 548 of a current holding compensator 540.

The Power Factor Correction (PFC) circuit 538 is coupled between the voltage drop circuit 535 and the output current controller 536 to correct the power factor of the AC source so as to reduce switching power loss. According to an embodiment of the invention, the PFC circuit 538 as shown in FIG. 5 may be comprised of the diodes Dl, D2 and D3 and the capacitors C1 and C2, and comprises an input terminal, an output terminal and a ground node. The capacitor C1 is coupled between the input terminal and an anode of the diode D2. The capacitor C2 is coupled between a cathode of the diode D2 and the ground node. An anode and a cathode of the diode D1 are respectively coupled to the ground node and the anode of the diode D2. An anode and a cathode of the diode D3 are respectively coupled to the cathode of the diode D2 and an output terminal of the PFC circuit 538. In addition, the input terminal of the PFC circuit 538 is coupled to an output terminal of the rectifier 532, and the output terminal of the PFC circuit 538 is coupled to an input terminal of the output current controller 536. Note that in other embodiments of the invention, the PFC circuit 538 and voltage drop circuit 535 may be implemented in any other forms and the invention should not be limited thereto.

In addition, the PFC circuit may also not be configured in the rectifying-modulating-driving apparatus. In this manner, the voltage sampler 544 may obtain the sample voltage by sampling at any node between the rectifier 532 and the output current controller 536.

The LED lamp 500 may further comprise a current holding compensator 540 to provide a compensation current when the AC source with the conducting angle is lower than a voltage after being bridge-rectified (i.e. the rectified source). The current holding compensator 540 comprises a reference voltage generator 542, a voltage sampler 544, a comparator 546 and a control switch 548. Details of these components are described as below.

In the embodiments, the comparator 546 comprises a positive input terminal (labeled by '+') coupled to the reference voltage generator 542 to receive the reference voltage and a negative input terminal (labeled by '-') coupled to the voltage sampler 544 to receive the sample voltage. However, according to other embodiments of the invention, the comparator 546 may also receive the sample voltage via the positive input terminal and receive the reference voltage via the negative input terminal (in this manner, the control switch 548 as shown in FIG. 5 should be replaced by an inverse element, such as changing an N-type Metal-Oxide-Semiconductor Field-Effect Transistor (MOSFET) with a P-type MOSFET to achieve the same results as the control switch 548). In addition to being coupled to the control switch 548, the output terminal of the comparator 546 is further coupled to a source VCC via a resistor R9. In the embodiment of the invention, the reference voltage fed into the positive input terminal is generated by the reference voltage generator 542. The reference voltage generator 542 is comprised of a Zener diode Z2 and resistors R2, R3 and R4. Note that for those who are skilled in this technology, the reference voltage may also be generated by using any kinds of circuit and the invention should not be limited thereto. The sample voltage fed into the negative input terminal is obtained by sampling from the rectifying-modulating-driving apparatus 530 via the voltage sampler 544. As shown in FIG. 5, the sample voltage may be obtained from a node between the capacitor C1 and the diode D1 of the PFC circuit 538 in the rectifying-modulating-driving apparatus 530. Note that the purpose of obtaining the sample voltage is to check the source voltage in the rectifying-modulating-driving apparatus 530. Therefore, according to other embodiments of the invention, the sample voltage may also be obtained from any node of the PFC circuit 538 (such as two terminals of the diode D3). The voltage sampler 544 may obtain a proper divided voltage via the resistors R5 and R6. Note that those who are skilled in this technology can make various alterations and modifications without departing from the scope and spirit of this invention to flexibly design the divided voltage, and the invention should not be limited to the above-mentioned embodiments.

In addition, a capacitor C3 may be added between the negative input terminal and the output terminal of the comparator 546 so that Hysteresis may occur to prevent the output of the comparator 546 from oscillating at a threshold point. In practice, the capacitor may be used to differentiate between an upward tuning point and a downward tuning point in the brightness tuning range of the LED.

The comparator 546 is used to generate a control signal by comparing the reference voltage and the sample voltage. The control switch 548 controls the compensation current between the rectifying-modulating-driving apparatus 530 and the ground GND according to the control signal. For example, when operating at a small conducting angle (reference may be made to FIG. 2), since the voltage input to the LED lamp 500 may change linearly with time, the voltage on the negative input terminal of comparator 546 may begin to increase linearly from 0V with time. Meanwhile, the output voltage of the comparator 546 may decrease (opposite to the voltage waveform as shown in FIG. 2) so that the compensation current of the control switch may also change linearly. When voltage on the negative input terminal of the comparator 546 exceeds the voltage on the positive input terminal of the comparator 546, the control switch 548 may conduct a minimum compensation current. In brief, when the AC source is lower than a voltage after being bridge-rectified, the compensation current may be used to maintain the current at a predetermined level. To be more specific, the main reason to cause the voltage waveform to be undesirable is that the current held between the LED lamp 500 and dimmer 510 is not enough. Therefore, the purpose of the invention is to improve the voltage waveform. After the current holding compensator 540 compares the sample voltage sampled from the rectifying-modulating-driving apparatus 530 with the reference voltage, the current holding compensator 540, together with the rectifying-modulating-driving apparatus 530, may automatically form a loop so that the rectifying-modulating-driving apparatus 530 may adjust the AC source by connecting the AC source to the ground GND, and thereby correcting the voltage waveform output to the of the LED lamp 500 and stabilizing the brightness of the LED lamp 500 when the held current is lower than an acceptable level.

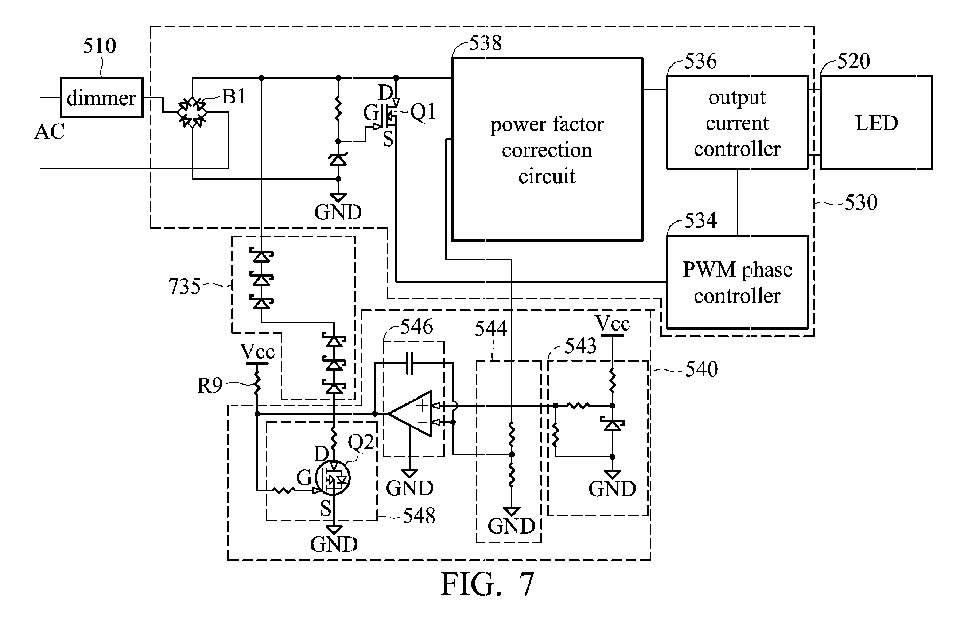

In the embodiment of the invention, the control switch 548 comprises a transistor Q2, the transistor comprises a gate G, a drain D and a source S, respectively coupled to the output terminal of the comparator 546, a source node of the rectifying-modulating-driving apparatus 530 and a ground GND. Note that the source node may be the output terminal (i.e. the source of the transistor Q1) of the voltage drop circuit 535. The purpose of coupling the drain of the transistor Q2 to the voltage drop circuit 353 is to obtain a low operating voltage, so as to reduce the size of a transistor and reduce fabrication costs thereof?. In other embodiment of the invention, the drain of the transistor Q2 may also be coupled to another source node (for example, the drain of transistor Q1, that is, the output of rectifier 532) via another voltage drop circuit 735 as shown in FIG. 7. The voltage drop circuit 735 may be comprised of at least a Zener diode. For other embodiment of the invention, those who are skilled in this technology can make various alterations and modifications without departing from the scope and spirit of this invention.

In addition to the LED lamp as previously described above, an LED lamp module is further proposed according to another embodiment of the invention. Referring to FIG. 5, in addition to the above-mentioned LED 520, the rectifying-modulating-driving apparatus 530, the current holding compensator 540 (including the reference voltage generator 542, the voltage sampler 544, the comparator 546 and the control switch 548), and the dimmer 510 is also comprised in the LED lamp module. The characteristics of the components in LED lamp module are similar to those as previously described in the above-mentioned embodiments and the corresponding illustrations are omitted here for brevity.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A light emitting diode (LED) lamp module, comprising:
at least one LED;
a dimmer, receiving an external alternating current (AC) source and generating
an AC source with a conducting angle;
a rectifying-modulating-driving apparatus, coupled between the LED and the
dimmer for bridge-rectifying and modulating the AC source with the conducting angle to drive the LED; and
a current holding compensator, coupled to the rectifying-modulating-driving
apparatus to provide a compensation current when the AC source with the conducting angle is lower than a voltage after being bridge-rectified.

2. The LED lamp module as claimed in claim 1, wherein the conducting angle is defined along rising or falling edge(s) of the AC source.

3. The LED lamp module as claimed in claim 1, wherein the current holding compensator comprises:
a comparator, comparing a reference voltage and a sample voltage sampled
from the rectifying-modulating-driving apparatus to output a control signal; and
a control switch, coupled to an output terminal of the comparator and a ground
node of the rectifying-modulating-driving apparatus to control the compensation current between the rectifying-modulating-driving apparatus and a ground according to the control signal.

4. The LED lamp module as claimed in claim 3, wherein the comparator comprises:
a first input terminal, receiving the reference voltage; and
a second input terminal, receiving the sample voltage,
wherein the first input terminal is a positive input terminal and the second
input terminal is a negative input terminal,
and the current holding compensator further comprises:
a capacitor coupled between the negative input terminal and the output
terminal of the comparator to prevent an output of the comparator from oscillating at a threshold point;
a first resistor; and
a power supply, wherein the output terminal of the comparator is coupled to
the power supply via the first resistor.

5. The LED lamp module as claimed in claim 4, wherein the current holding compensator further comprises:
a reference voltage generator, coupled to power supply to generate the
reference voltage; and
a voltage sampler, coupled to the rectifying-modulating-driving apparatus to
obtain the sample voltage from the rectifying-modulating-driving apparatus.

6. The LED lamp module as claimed in claim 3, wherein the rectifying-modulating-driving apparatus comprises a rectifier coupled to the dimmer to bridge-rectify the AC source with the conducting angle so as to generate a rectified source.

7. The LED lamp module as claimed in claim 3, wherein the sample voltage is obtained by sampling the rectified source.

8. The LED lamp module as claimed in claim 6, wherein the rectifying-modulating-driving apparatus further comprises:
a first voltage drop circuit, coupled to the rectifier and receiving the rectified
source to generate a voltage drop source;
an output current controller, coupled between the first voltage drop circuit and
the LED; and
a pulse width modulation phase controller, coupled to the first voltage drop
circuit and the output current controller for modulating the voltage drop source and generating a pulse width modulation (PWM) signal, wherein the output current controller drives the LED according to the PWM signal.

9. The LED lamp module as claimed in claim 8, wherein the first voltage drop circuit comprises a first transistor, a Zener diode and a second resistor, one terminal of the second resistor is coupled to an output terminal of the rectifier and a drain of the first transistor, and another terminal of the second resistor is coupled to a gate of the first transistor and a cathode of the Zener diode, and an anode of the Zener diode is coupled to the ground and a source of the first transistor is coupled to the control switch of the current holding compensator.

10. The LED lamp module as claimed in claim 8, wherein the control switch comprises a second transistor, the second transistor comprises a gate, a first source/drain and a second source/drain, respectively coupled to an output terminal of the comparator, the first voltage drop circuit and the ground.

11. The LED lamp module as claimed in claim 8, wherein the rectifying-modulating-driving apparatus further comprises a power factor correction circuit coupled between the first voltage drop circuit and the output current controller to correct the power factor of the AC source so as to reduce switching power loss.

12. The LED lamp module as claimed in claim 11, wherein the power factor correction circuit comprises: a first diode; a second diode; a third diode; a first capacitor; and a second capacitor, wherein the first capacitor is coupled between an input terminal of the power factor correction circuit and an anode of the second diode; the second capacitor is coupled between a cathode of the second diode and the ground; an anode and a cathode of the first diode are respectively coupled to the ground and the anode of the second diode; an anode and a cathode of the third diode are respectively coupled to the cathode of the second diode and an output terminal of the power factor correction circuit; the input terminal of the power factor correction circuit is coupled to an output terminal of the rectifier; and the output terminal of the power factor correction circuit is coupled to an input terminal of the output current controller.

13. The LED lamp module as claimed in claim 12, wherein the sample voltage is obtained from a node between the first capacitor and the first diode of the power factor correction circuit.

14. The LED lamp module as claimed in claim 8, wherein the sample voltage is obtained from a node between the rectifier and the output current controller.

15. The LED lamp module as claimed in claim 6, further comprising a second voltage drop circuit, coupled between an output terminal of the rectifier and the control switch.
